# EUROPÄISCHE PATENTSCHRIFT

(11) **EP 1 987 270 B1**
(45) Veröffentlichungstag und Bekanntmachung des Hinweises auf die Patenterteilung: **01.09.2010**
(21) Anmeldenummer: 07703685.3
(22) Anmeldetag: 08.01.2007
(51) Int. Cl.: F16H 25/20, B60N 2/02

(54) **SPINDELANTRIEB, INSBESONDERE ZUM VERSTELLEN EINES BEWEGLICHEN TEILS IM KRAFTFAHRZEUG UND VERFAHREN ZUR HERSTELLUNG DIESES SPINDELANTRIEBS**
SPINDLE DRIVE, IN PARTICULAR FOR ADJUSTING A MOVEABLE PART IN A MOTOR VEHICLE, AND METHOD FOR PRODUCING SAID SPINDLE DRIVE
MÉCANISME D'ENTRAINEMENT À BROCHE, NOTAMMENT POUR POSITIONNER UNE PIÈCE MOBILE DANS UN VÉHICULE AUTOMOBILE ET PROCÉDÉ DE FABRICATION DE CE MÉCANISME D'ENTRAINEMENT À BROCHE

(30) Priorität: 14.02.2006 DE 102006006925
(43) Veröffentlichungstag der Anmeldung: 05.11.2008
(73) Patentinhaber: Robert Bosch GmbH, 70442 Stuttgart (DE)
(72) Erfinder: OBERLE, Hans-Jürgen, 76437 Rastatt (DE); LIENIG, Andreas, 77815 Buehl (DE)
(86) Internationale Anmeldenummer: PCT/EP2007/050134
(87) Internationale Veröffentlichungsnummer: WO 2007/093458

(56) Entgegenhaltungen:
- EP-A2- 0 759 374
- EP-A2- 0 884 213
- DE-C1- 4 101 470
- US-A1- 2002 073 790

## Beschreibung

### Stand der Technik

Die Erfindung betrifft einen Spindelantrieb mit einem Trägerrohr, insbesondere zum Verstellen eines beweglichen Teils im Kraftfahrzeug, nach der Gattung der unabhängigen Ansprüche.

Mit der gattungsbildenden EP 0 759 374 A2 ist eine Vorrichtung zum Verstellen eines Sitzes im Kraftfahrzeug bekannt geworden, die gegenüber dem Normalbetrieb erheblich größere Kräfte aufnehmen kann. Solche Kräfte werden beispielsweise durch einen Verkehrsunfall verursacht. Hierbei ist es wichtig, dass der Fahrzeugsitz fest mit der Karosserie verbunden bleibt, um die Funktion der vorgesehenen Schutzmaßnahmen für die Fahrzeuginsassen (Sicherheitsgurt, Airbag) zu gewährleisten. Bei obiger Vorrichtung ist eine Gewindemutter, die eine Gewindespindel aufnimmt, fest mit der Karosserie verbunden. Die Gewindespindel wird über ein Schneckengetriebe von einem Elektromotor angetrieben, der seinerseits fest mit dem Sitz verbunden ist. Das Getriebegehäuse des Schneckengetriebes ist aus Kunststoff gefertigt und über ein weiteres Gehäuseteil mit dem Antriebsmotor verbunden. Wird der Antriebsmotor betätigt, dreht sich die Gewindespindel und verschiebt das Getriebegehäuse einschließlich Antriebsmotor und Sitz gegenüber der Gewindemutter. Um beispielsweise bei einem Auffahrunfall das Losreißen des Getriebegehäuses von der Gewindespindel zu verhindern, ist ein zusätzliches metallisches, u-förmiges Stützteil vorgesehen, das das Getriebegehäuse über einen gelenkigen Befestigungsbolzen mit dem Antriebsmotor und somit mit dem Sitz verbindet. Nachteil dieser Ausführung ist, dass das u-förmige Stützteil ein Ausknicken der Spindel bei einer Druckbelastung derselben nicht verhindern kann.

### Offenbarung der Erfindung

### Vorteile der Erfindung

Die erfindungsgemäße Vorrichtung und das erfindungsgemäße Verfahren mit den Merkmalen der unabhängigen Ansprüche haben den Vorteil, dass durch die verschachtelte Anordnung des Führungsrohrs gegenüber dem Trägerrohr der auf die Spindel einwirkende Kraftfluss praktisch momentenfrei direkt vom Führungsrohr auf das Trägerrohr in die kundenseitige Befestigungsvorrichtung eingeleitet werden kann. Dadurch wird ein Ausknicken der Spindel zuverlässig verhindert, wodurch höhere Crash-Kräfte aufgenommen werden können. Außerdem kann im normalen Verstell-Betrieb die axial bewegte Spindelmutter im Führungsrohr zuverlässig geführt werden.

Durch die in den abhängigen Ansprüchen aufgeführten Maßnahmen sind vorteilhafte Weiterbildungen und Verbesserungen der in den unabhängigen Ansprüchen angegebenen Ausführungen möglich. Besonders vorteilhaft ist es, das Trägerrohr und das Führungsrohr mit einem kreisrunden Querschnitt auszubilden, da dann die beiden Rohre formschlüssig ineinander eingesteckt werden können. Ist das Führungsrohr und das Trägerrohr konzentrisch zur Spindelachse ausgeführt, können die beiden Rohre sehr einfach ineinander gefügt werden, wobei diese Verbindung besonders toleranzunempfindlich gegen einen Mittenversatz ist.

Eine besonders hohe Knickfestigkeit wird erzielt, wenn das Führungsrohr in einem bestimmten Überlappungsbereich unmittelbar am Trägerrohr radial anliegt. Über die Länge des Überlappbereichs kann dabei die Knickfestigkeit beeinflusst werden.

In einer alternativen Ausführung ist zwischen dem Trägerrohr und dem Führungsrohr radial ein Adapterelement eingefügt. Das Adapterelement kann beispielsweise als zapfenförmiger Ring auf das Trägerrohr geschoben werden und anschließend das Führungsrohr auf das zapfenförmige Adapterelement aufgeschoben werden. Dadurch kann der Durchmesser des Führungsrohrs den Abmessungen einer auf der Spindel angeordneten Gewindemutter angepasst werden.

Durch die zapfenförmige Ausbildung des Adapterelementes oder des Endes des Trägerrohrs kann einerseits eine Mantelfläche zur radialen Anlage der Innenseite des Führungsrohrs geschaffen werden und gleichzeitig ein axialer Anschlag für das Führungsrohr ausgebildet werden. Durch entsprechende Materialauswahl des Aufnahmezapfens kann hierdurch beispielsweise auch eine Presspassung zwischen dem Führungsrohr und dem Trägerrohr realisiert werden.

Das zapfenförmige Adapterelement - oder auch das Ende des Trägerrohrs - kann gleichzeitig als axialer Anlauf für die Spindelmutter ausgebildet sein, damit diese beim sanft abgedämpft wird.

Ist auf der Spindel eine drehbare Gewindemutter angeordnet, die beispielsweise mit dem zu verstellenden Teil verbunden ist, kann die Gewindemutter bei ihrer Linearbewegung radial durch das Führungsrohr abgestützt werden. Je nach Anwendung kann hierbei die äußere Mantelfläche der Gewindemutter an der Innenfläche des Führungsrohrs anliegen oder mit einem geringen Abstand zu dieser angeordnet sein.

Besonders vorteilhaft ist es, wenn das Führungsrohr auf dem Trägerrohr durch die Montage des Getriebegehäuses zuverlässig befestigt wird. Hierzu kann das Getriebegehäuse, das beispielsweise einen Grundkörper und einen Deckel aufweist, radial nach Art einer Manschette um die beiden aufeinander gesteckten Rohre montiert werden.

Dabei ist es besonders günstig, wenn für die Befestigung des Führungsrohrs gegenüber dem Trägerrohr keine zusätzlichen separaten Verbindungsmittel notwendig sind. Dies kann beispielsweise dadurch erreicht werden, dass im Trägerrohr und im Führungsrohr Aussparungen ausgebildet sind, in die radiale Fortsätze des Getriebegehäuses formschlüssig eingreifen. Durch die Montage des beispielsweise zweiteiligen Getriebegehäuses wird gleichzeitig mit der Verbindung der Getriebegehäuseteile auch das Führungsrohr gegenüber dem Trägerrohr, sowie beide Rohre gegenüber dem Getriebegehäuse befestigt.

Werden die Befestigungsmittel zwischen dem Getriebegehäuse und dem Trägerrohr mit dem Führungsrohr symmetrisch zum auf der Spindel angeordneten Antriebsrad ausgebildet, kann die Spindel ohne konstruktive Änderung der einzelnen Bauteile wahlweise in die eine oder die andere Richtung aus dem Getriebegehäuse ragen. Dadurch kann der als Baukastensystem aufgebaute Spindelmotor für verschiedene Einbaulagen ohne zusätzlichen Aufwand angepasst werden.

Das zapfenförmige Ende des Trägerrohrs kann beispielsweise einstückig mit dem Trägerrohr oder als separates Bauteil ausgeführt werden, das in das Trägerrohr eingelegt oder im Trägerrohr befestigt wird. Dabei dient die radiale Innenfläche des zapfenförmigen Endes einerseits zur radialen und axialen Lagerung des Antriebsrads, und der Außenmantel gleichzeitig zur Aufnahme des Führungsrohrs bzw. eines Adapterelementes. Ist das topfförmige Lagerschild einteilig mit dem Trägerrohr ausgebildet, kann dieses vorteilhaft sehr kostengünstig mittels Tiefziehverfahren in einem Arbeitsgang ausgebildet werden.

Beim erfindungsgemäßen Herstellungsverfahren des Spindelantriebs stellt das Trägerrohr mit dem darauf aufgesteckten Führungsrohr ein vorgefertigtes Modul dar, auf das anschließend das Getriebegehäuse montiert werden kann. Dabei muss der Montageprozess für das Modul mit dem Führungsrohr nur unwesentlich gegenüber dem Modul ohne Führungsrohr angepasst werden.

Durch die symmetrische Ausbildung der Befestigungsmittel am Spindelmodul gegenüber dem Getriebegehäuse kann die Einbaulage der Spindel problemlos um 180° gedreht werden. Dabei müssen keinerlei bauliche Veränderungen der einzelnen Bauteile vorgenommen werden. Die Befestigungsmittel zwischen dem Getriebegehäuse und dem Trägerrohr-Führungsrohr-Modul können in einfacher Weise variiert und angepasst werden, wobei es besonders vorteilhaft ist, dass das Führungsrohr-Modul in einem Arbeitsgang mit der Montage des Getriebegehäuses gegenüber diesem fixiert wird. Das Getriebegehäuse kann dabei beispielsweise mittels Schrauben, Klipsen, Schweißen oder Pressen zusammengefügt werden.

Ausführungsbeispiele der Erfindung sind in den Zeichnungen dargestellt und in der nachfolgenden Beschreibung näher erläutert. Es zeigen
- Figur 1: ein erstes Ausführungsbeispiel eines Spindelantriebs im Schnitt und
- Figur 2: ein weiteres Ausführungsbeispiel.

### Beschreibung

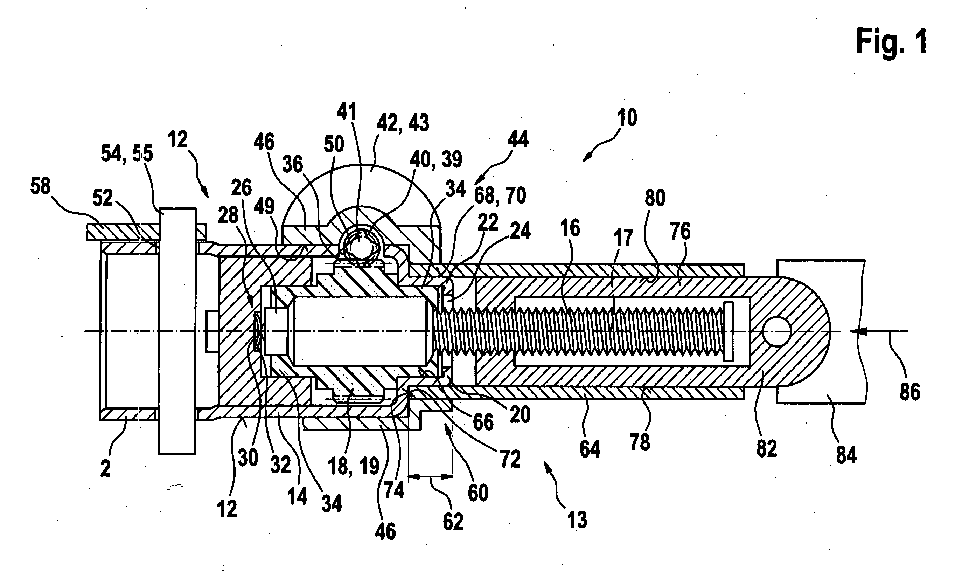

Der in Figur 1 dargestellte Spindel-Antrieb 10 besteht aus einer ersten Baugruppe 12, bei der in einem Trägerrohr 14 eine Spindel 16 mit einem darauf angeordneten Antriebsrad 18 gelagert ist. Das Trägerrohr 14 ist beispielsweise mittels Tiefziehen hergestellt und weist an einem Endbereich 20 eine topfförmige Lageraufnahme 22 für das Antriebsrad 18 auf. Die Spindel 16 ragt durch eine Öffnung 24 in der topfförmigen Lageraufnahme 22 aus dem Trägerrohr 14 heraus. Das andere Spindelende 26 befindet sich innerhalb des Trägerrohrs 14 und wird axial und radial mittels eines Lagerschilds 28 gelagert, das innerhalb des Trägerrohrs 14 befestigt ist. Das Spindelende 26 weist beispielsweise eine kugelförmige Anlauffläche 30 auf, die axial am Lagerschild 28 anliegt. Optional kann im Lagerschild 28 eine Anlaufscheibe 32 mit erhöhter Festigkeit angeordnet werden. Das Antriebsrad 18 ist im Ausführungsbeispiel als Schneckenrad 19 ausgebildet, das zur radialen Lagerung axiale Fortsätze 34 aufweist. Das Antriebsrad 18 ist aus Kunststoff direkt auf die Spindel 16 aufgespritzt oder drehfest auf dieser befestigt und weist eine Verzahnung 36 auf, die mit einem Abtriebselement 40 eines Antriebsaggregats 42 kämmt. Das Antriebsaggregat 42 ist als Elektromotor 43 ausgebildet, der ein Getriebegehäuse 46 aufweist, das mittels einer Kopplungsvorrichtung 44 mit der ersten Baugruppe 12 verbunden. Dabei umschließt eine Innenkontur 49 des Getriebegehäuses 46 eine Außenkontur 15 der Baugruppe12. Zur Übertragung des Antriebmoments vom Antriebsaggregat 42 auf die separate Baugruppe 12 weist das Trägerrohr 14 eine radiale Aussparung 50 auf, in die das Abtriebselement 40 eingreift. Das Abtriebselement 40 ist beispielsweise als Schnecke 39 ausgebildet, die auf einer Ankerwelle 41 des Elektromotors 43 angeordnet ist. Das Trägerrohr 14 bildet praktisch als Standardbauteil ein Gehäuse für die separate Baugruppe 12, an dem eine Aufnahme 52 für eine Befestigungsvorrichtung 54 angeordnet ist. Beispielsweise ist als Befestigungsvorrichtung 54 ein Gelenkbolzen 55 mittig zum Trägerrohr 14 in die Aufnahme 52 einschiebbar. Über diese Befestigungsvorrichtung 54 ist das Trägerrohr 14 beispielsweise gelenkig mit einem zu verstellenden Teil 58 im Kraftfahrzeug verbunden, beispielsweise ein nicht näher dargestellter Sitz oder ein Sitzteil, das gegenüber einem anderen Sitzteil verstellt wird.

Die aus dem Trägerrohr 14 ragende Spindel 16 ist in einem Führungsrohr 64 angeordnet, das auf das Ende 20 des Trägerrohrs 14 aufgesteckt ist. Dabei überlappen sich das Trägerrohr 14 und das Führungsrohr 64 in einem Überlappungsbereich 60, dessen Länge 62 entsprechend der Anforderungen an die Knickfestigkeit vorgebbar ist. Das Ende 20 des Trägerrohrs 14 ist topfförmig ausgebildet und bildet mit seiner Innenfläche 66 die Lageraufnahme 22 für das Antriebsrad 18 und mit seiner Außenfläche 68 ein zapfenförmiges Aufnahmeelement 70 für das Führungsrohr 64. Das Führungsrohr 64 und das Trägerrohr 14, bzw. der Aufnahmezapfen 70 weisen einen kreisrunden Querschnitt auf, so dass die beiden Rohre 64 und 14 zentriert zur Spindelachse 17 ineinander greifen. Bei dieser Ausführung liegt das Führungsrohr 64 unmittelbar radial an der Außenfläche 68 des Trägerrohrs 14 an. Das Führungsrohr 64 weist eine Stirnfläche 72 auf, die an einem Anschlag 74 axial des Trägerrohrs 14 anliegt. Auf der Spindel 16 ist eine Gewindemutter 76 drehbar gelagert, die durch die Drehung der Spindel 16 entlang der Spindelachse 17 linear verschoben wird. Die Gewindemutter 76 weist eine äußere Mantelfläche 78 auf, die sich an der Innenwand 80 des Führungsrohrs 64 abstützten kann. Die Gewindemutter 76 ragt an einem dem Trägerrohr 14 abgewandten Ende 82 aus dem Führungsrohr 64 und ist beispielsweise mit der Karosserie 84 verbunden.

Wirkt nun bei einem Auffahrunfall entlang der Spindelachse 17 eine Druckkraft 86 auf die Spindel 16 ein, stützt sich die Spindel 16 seitlich am Führungsrohr 64 ab, das über den Aufnahmezapfen 70 knickfest mit dem Trägerrohr 14 verbunden ist. Beim seitlichen Wegknicken der Spindel 16 werden auftretende Drehmomente über das Trägerrohr 14 auf die Befestigungsvorrichtung 54 abgeleitet. Dadurch bleibt die Spindel 16 und damit das zu verstellende Teil 58 auch im Crash-Fall an seinem bestimmungsgemäßen Ort.

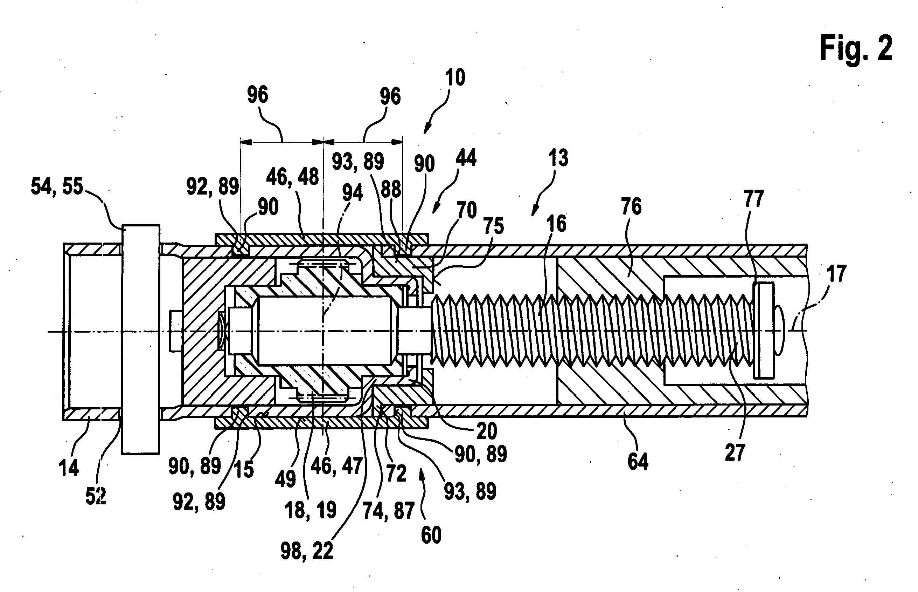

Figur 2 zeigt eine weiter Ausführungsvariante eines Spindelantriebs 10, bei dem auf dem Trägerrohr 14 ein Adapterelement 88 angeordnet ist, auf dem wiederum das Führungsrohr 64 mit einem Überlappungsbereich 60 angeordnet ist. Das Adapterelement 88 ist zapfenförmig mit kreisrundem Querschnitt ausgebildet und übernimmt die Funktion des als Aufnahmezapfen 70 ausgebildeten Endes 20 des Trägerrohrs 14 in Figur 1. Das Führungsrohr 64 liegt radial direkt am Adapterelement 88 an, das radial zwischen dem Führungsrohr 64 und dem Ende 20 des Trägerrohrs 14 angeordnet ist. Dabei bildet ein Bund 87 des Adapterelements 88 den axialen Anschlag 74 für das Führungsrohr 64. Das Adapterelement 88 weist gegenüberliegend zum Bund 87 einen axialen Anlauf 75 auf, an dem die Gewindemutter 76 beim Anfahren gedämpft wird. Das in das Führungsrohr 64 ragende Ende 27 der Spindel 16 weist einen Anschlag für die Gewindemutter 76 auf. Das auf das Trägerrohr 14 aufgesteckte Führungsrohr 64 bildet ein gemeinsames Modul 13, das nach dessen Zusammenbau an dessen Außenkontur 49 mit dem Antriebsaggregat 42 verbunden wird. Dazu weist das Antriebsaggregat 42 ein Getriebegehäuse 46 mit einer Innenkontur 15 auf, an der radiale Fortsätze 90 angeordnet sind, die in korrespondierende radiale Ausnehmungen 92 und 93 des Trägerrohrs 14 und des Führungsrohrs 64 greifen. Die radialen Fortsätze 90 bilden zusammen mit den Ausnehmungen 92 und 93 Befestigungsmittel 89 der Kopplungsvorrichtung 44 für das Modul 13. In weiteren Ausführungsvarianten auch können die Befestigungsmittel 89 auch durch andere Formschlüsse gebildet werden. Die Befestigungsmittel 89 sind in Figur 2 symmetrisch zu einer Mittelebene 94 des Antriebsrads 18 angeordnet, wodurch das Modul 13 um 180° verdreht eingebaut werden kann, ohne die einzelnen Bauteile konstruktiv zu ändern. So sind beispielsweise die Ausnehmungen 92 und 93 mit den korrespondierenden radialen Fortsätzen 90 im gleichen axialen Abstand 96 zur Mittelebene 94 ausgeformt. Das Getriebegehäuse 46 weist einen Grundkörper 47 und einen Deckel 48 auf, die radial um das Modul 13 montiert und miteinander verbunden werden. Dabei werden mit dem Verbinden der beiden Getriebegehäuseteile 47 und 48 gleichzeitig das Trägerrohr 14 und das Führungsrohr 64 des Moduls 13 am Getriebegehäuse 46 über die Befestigungsmittel 89 befestigt.

In einer in der unteren Bildhälfte der Figur 2 dargestellten Variation ist das topfförmige Ende 20 des Trägerrohrs 14 als separates Bauelement 98 ausgebildet, das als Lageraufnahme 22 in das zylindrische Trägerrohr 14 eingefügt ist. Das Bauelement 98 übernimmt dieselbe Funktion, wie der Aufnahmezapfen 70 der einstückig mit dem Trägerrohr ausgebildeten Ausführung.

Es sei angemerkt, dass hinsichtlich der in den Figuren gezeigten Ausführungsbeispiele und der Beschreibung vielfältige Kombinationsmöglichkeiten der einzelnen Merkmale untereinander möglich sind. So kann beispielsweise das Trägerrohr 14 in unterschiedlichen Verfahren hergestellt werden und unterschiedliche konkrete Ausformungen aufweisen. Anstatt eine angeformten topfförmigen Lageraufnahme 22 kann das Trägerrohr 14 auch als glattes Zylinderrohr ausgebildet sein, in das zwei separate Lagerschilde 28 für die Lagerung der Spindel 16 angeordnet werden. Die Spindel 16 wird vorzugsweise über das darauf gelagerte Antriebsrad 18 gelagert, kann in einer Variation aber auch mittels Lagerflächen gelagert werden, die direkt an der Spindel 16 angeformt sind. Die Momentübertragung vom Antriebsaggregat 42 ist nicht auf ein Schneckengetriebe 19, 39 beschränkt, sondern kann beispielsweise auch mittels eines Stirnradgetriebes übertragen werden. Die konkrete Form und Materialauswahl des Aufnahmezapfens 70 wird entsprechend der Festigkeitsanforderung gewählt, wobei nach Bedarf der Aufnahmezapfen 70 als Adapterelement 88 ausgebildet sein kann. So kann der Aufnahmezapfen 70 auch abgestuft oder sich verjüngend ausgebildet sein. Der Querschnitt des Trägerrohrs 14 und des Führungsrohrs 64 sind nicht auf einen Kreis beschränkt, sondern können beispielsweise einen rechteckigen oder eliptischen Querschnitt (zum Toleranzausgleich) aufweisen. Jedoch kann bei einer zylindrischen Ausbildung des Trägerrohrs 14 das Führungsrohr 64 zuverlässig bezüglich der Spindelachse 17 zentriert werden.

## Patentansprüche

1. Spindelantrieb (10), insbesondere zum Verstellen eines beweglichen Teils (58) im Kraftfahrzeug, mit einem Antriebsaggregat (42), das ein auf einer Spindel (16) gelagertes Antriebsrad (18) antreibt, und das Antriebsrad (18) drehbar in einem Trägerrohr (14) gelagert ist, das eine Aufnahme (52) für eine Befestigungsvorrichtung (54) zum Ableiten von Crash-Kräften aufweist, **dadurch gekennzeichnet, dass** koaxial zur Spindel (16) ein diese aufnehmendes Führungsrohr (64) angeordnet ist, das axial mit dem Trägerrohr (14) überlappt.

2. Spindelantrieb (10) nach Anspruch 1, **dadurch gekennzeichnet, dass** das Trägerrohr (14) und das Führungsrohr (64) zylinderförmig ausgebildet sind und das Führungsrohr (64) auf oder in das Trägerrohr (14) gesteckt ist.

3. Spindelantrieb (10) nach einem der Ansprüche 1 oder 2, **dadurch gekennzeichnet, dass** eine Innenwand (80) des Führungsrohrs (64) direkt radial an einer Außenwand (68) des Trägerrohrs (14) anliegt.

4. Spindelantrieb (10) nach einem der vorhergehenden Ansprüche, **dadurch gekennzeichnet, dass** radial zwischen dem Trägerrohr (14) und dem Führungsrohr (64) ein Adapterring (88) angeordnet ist.

5. Spindelantrieb (10) nach einem der vorhergehenden Ansprüche, **dadurch gekennzeichnet, dass** ein Ende (20) des Trägerrohrs (14) oder des Adapterrings (88) zur Aufnahme des Führungsrohrs (64)zapfenförmig ausgebildet ist und einen axialen Anschlag (74, 87) für das Führungsrohr (64)aufweist.

6. Spindelantrieb (10) nach einem der vorhergehenden Ansprüche, **dadurch gekennzeichnet, dass** ein Ende (20) des Trägerrohrs (14) oder des Adapterrings (88) einen axialen Anlauf (75) für die Spindelmutter (76) aufweist.

7. Spindelantrieb (10) nach einem der vorhergehenden Ansprüche, **dadurch gekennzeichnet, dass** auf der Spindel (16) eine Gewindemutter (76) drehbar angeordnet ist, die innerhalb des Führungsrohrs (64) geführt wird.

8. Spindelantrieb (10) nach einem der vorhergehenden Ansprüche, **dadurch gekennzeichnet, dass** das Antriebsaggregat (42) ein Getriebegehäuse (46) aufweist mittels dem das Führungsrohr (64) gegenüber dem Trägerrohr (14) - insbesondere ohne separate Verbindungsmittel - befestigt ist.

9. Spindelantrieb (10) nach einem der vorhergehenden Ansprüche, **dadurch gekennzeichnet, dass** das - insbesondere radial montierbare - Getriebegehäuse (46, 47, 48) als Befestigungsmittel (89) radial nach innen gerichtete Fortsätze (90) aufweist, die in als Befestigungsmittel (89) ausgebildete Aussparungen (92) im Führungsrohr (64) und in Aussparungen (93) im Trägerrohr (14) eingreifen.

10. Spindelantrieb (10) nach einem der vorhergehenden Ansprüche, **dadurch gekennzeichnet, dass** die Befestigungsmittel (89) symmetrisch zu einer quer zur Spindel (16) sich erstreckenden Mittelebene (94) des Antriebsrads (18) angeordnet sind.

11. Spindelantrieb (10) nach einem der vorhergehenden Ansprüche, **dadurch gekennzeichnet, dass** das die Außenkonturen (15) des Trägerrohrs (14) und des Führungsrohrs (64) und die Innenkontur (49) des insbesondere zweiteiligen Getriebegehäuses (46, 47, 48) mit den Befestigungsmitteln (89) derart ausgebildet sind, dass die Spindel (16) mit dem Führungsrohr (64) in zwei 180° gegeneinander verdrehte Einbaupositionen (Spindel (16) nach links oder rechts aus dem Getriebegehäuse (46) ragend) montierbar ist, ohne die verwendeten Bauteile konstruktive zu ändern.

12. Spindelantrieb (10) nach einem der vorhergehenden Ansprüche, **dadurch gekennzeichnet, dass** das Trägerrohr (14) ein topfförmiges axiales Lagerschild (22) aufweist, das einteilig mit dem Trägerrohr (14) ausgebildet ist oder als separat ausgebildetes Bauteil (98) im Trägerrohr (14) befestigt ist.

13. Verfahren zur Herstellung eines Spindelantriebs (10) nach einem der vorhergehenden Ansprüche, **dadurch gekennzeichnet, dass** zuerst die Spindel (16) mit dem Antriebsrad (18) in das Trägerrohr (14) montiert wird, danach das Führungsrohr (64) axial in oder auf das Trägerrohr (14) gesteckt wird und anschließend das Getriebegehäuse (46, 47, 48) radial um das Trägerrohr (14) und das Fuhrungsrohr (64) angeordnet wird, wodurch das Führungsrohr (64) zentriert mit dem Trägerrohr (14) verbunden wird.

14. Verfahren nach Anspruch 13, **dadurch gekennzeichnet, dass** für verschiedene Einbaulagen der Spindelantrieb (10) immer ein einheitliches Standard-Getriebegehäuse (46) verwendet wird, in das das Trägerrohr (14) mit dem Führungsrohr (64) und mit der Spindel (16) wahlweise derart eingebaut werden kann, dass die Spindel (16) axial an der einen Seite oder der gegenüberliegenden Seite aus dem Getriebegehäuse (46) ragt.

## Claims

1. Spindle drive (10), in particular for adjusting a movable part (58) in a motor vehicle, with a drive assembly (42) which drives a driving wheel (18) mounted on a spindle (16), and the driving wheel (18) being mounted rotatably in a carrier tube (14) which has a receptacle (52) for a fastening device (54) for the dissipation of crash forces, **characterized in that** arranged coaxially with respect to the spindle (16) is a guide tube (64) which receives the latter and which overlaps axially with the carrier tube (14).

2. Spindle drive (10) according to Claim 1, **characterized in that** the carrier tube (14) and the guide tube (64) are of cylindrical design, and the guide tube (64) is plugged onto or into the carrier tube (14).

3. Spindle drive (10) according to either one of Claims 1 and 2, **characterized in that** an inner wall (80) of the guide tube (64) directly bears radially against an outer wall (68) of the carrier tube (14).

4. Spindle drive (10) according to one of the preceding claims, **characterized in that** an adapter ring (88) is arranged radially between the carrier tube (14) and the guide tube (64).

5. Spindle drive (10) according to one of the preceding claims, **characterized in that** one end (20) of the carrier tube (14) or of the adapter ring (88) is of tenon-shaped design for receiving the guide tube (64) and has an axial stop (74, 87) for the guide tube (64).

6. Spindle drive (10) according to one of the preceding claims, **characterized in that** one end (20) of the carrier tube (14) or of the adapter ring (88) has an axial shoulder (75) for the spindle nut (76).

7. Spindle drive (10) according to one of the preceding claims, **characterized in that** a threaded nut (76), which is guided inside the guide tube (64), is arranged rotatably on the spindle (16).

8. Spindle drive (10) according to one of the preceding claims, **characterized in that** the drive assembly (42) has a gearcase (46), by means of which the guide tube (64) is fastened with respect to the carrier tube (14), in particular without separate connection means.

9. Spindle drive (10) according to one of the preceding claims, **characterized in that** the in particular radially mountable-gearcase (46, 47, 48) has as fastening means (89) extensions (90) which are directed radially inwards and which engage into clearances (92), formed as fastening means (89), in the guide tube (64) and into clearances (93) in the carrier tube (14).

10. Spindle drive (10) according to one of the preceding claims, **characterized in that** the fastening means (89) are arranged symmetrically with respect to a mid-plane (94) of the driving wheel (18), the said mid-plane extending transversally with respect to the spindle (16).

11. Spindle drive (10) according to one of the preceding claims, **characterized in that** the outer contours (15) of the carrier tube (14) and of the guide tube (64) and the inner contour (49) of the in particular two-part gearcase (46, 47, 48) with the fastening means (89) are designed in such a way that the spindle (16) together with the guide tube (64) can be mounted in two installation positions rotated at 180° with respect to one another (spindle (16) projecting out of the gearcase (46) to the left or to the right), without the components used being changed structurally.

12. Spindle drive (10) according to one of the preceding claims, **characterized in that** the carrier tube (14) has a pot-shaped axial bearing plate (22) which is formed in one piece with the carrier tube (14) or is fastened as a separately produced component (98) in the carrier tube (14).

13. Method for producing a spindle drive (10) according to one of the preceding claims, **characterized in that**, first, the spindle (16) with the driving wheel (18) is mounted in the carrier tube (14), thereafter the guide tube (64) is plugged axially into or onto the carrier tube (14), and subsequently the gearcase (46, 47, 48) is arranged radially around the carrier tube (14) and the guide tube (64), with the result that the guide tube (64) is connected in centred fashion to the carrier tube (14).

14. Method according to Claim 13, **characterized in that**, for different installation positions of the spindle drive (10), a uniform standard gearcase (46) is always used, into which the carrier tube (14) with the guide tube (64) and with the spindle (16) can be selectively installed in such a way that the spindle (16) projects out of the gearcase (46) axially on one side or on the opposite side.

## Revendications

1. Entraînement à broche (10), notamment pour le réglage d'une pièce mobile (58) dans un véhicule automobile, comprenant une unité d'entraînement (42) qui entraîne une roue d'entraînement (18) montée sur une broche (16), la roue d'entraînement (18) étant montée de manière rotative dans un tube porteur (14), qui présente un logement (52) pour un dispositif de fixation (54) pour dévier les forces de collision, **caractérisé en ce que** coaxialement à la broche (16) est disposé un tube de guidage (64) qui la reçoit, lequel chevauche axialement le tube porteur (14).

2. Entraînement à broche (10) selon la revendication 1, **caractérisé en ce que** le tube porteur (14) et le tube de guidage (64) sont réalisés sous forme cylindrique et le tube de guidage (64) est enfiché sur ou dans le tube porteur (14).

3. Entraînement à broche (10) selon l'une quelconque des revendications 1 ou 2, **caractérisé en ce qu'**une paroi interne (80) du tube de guidage (64) s'applique directement radialement contre une paroi extérieure (68) du tube porteur (14).

4. Entraînement à broche (10) selon l'une quelconque des revendications précédentes, **caractérisé en ce que** radialement entre le tube porteur (14) et le tube de guidage (64) est disposée une bague d'adaptateur (88).

5. Entraînement à broche (10) selon l'une quelconque des revendications précédentes, **caractérisé en ce qu'**une extrémité (20) du tube porteur (14) ou de la bague d'adaptateur (88) est réalisée en forme de tourillon pour recevoir le tube de guidage (64) et présente une butée axiale (74, 87) pour le tube de guidage (64).

6. Entraînement à broche (10) selon l'une quelconque des revendications précédentes, **caractérisé en ce qu'**une extrémité (20) du tube porteur (14) ou de la bague d'adaptateur (88) présente une butée axiale (75) pour l'écrou de broche (76).

7. Entraînement à broche (10) selon l'une quelconque des revendications précédentes, **caractérisé en ce qu'**un écrou fileté (76) est disposé de manière rotative sur la broche (16), lequel est guidé à l'intérieur du tube de guidage (64).

8. Entraînement à broche (10) selon l'une quelconque des revendications précédentes, **caractérisé en ce que** l'unité d'entraînement (42) présente un boîtier de transmission (46) au moyen duquel le tube de guidage (64) est fixé par rapport au tube porteur (14) - notamment sans moyen de connexion séparé.

9. Entraînement à broche (10) selon l'une quelconque des revendications précédentes, **caractérisé en ce que** le boîtier de transmission (46, 47, 48) - pouvant notamment être monté radialement - présente, en tant que moyens de fixation (89) des saillies (90) orientées radialement vers l'intérieur, qui viennent en prise dans des évidements (92) réalisés en tant que moyens de fixation (89) dans le tube de guidage (64) et dans des évidements (93) dans le tube porteur (14).

10. Entraînement à broche (10) selon l'une quelconque des revendications précédentes, **caractérisé en ce que** les moyens de fixation (89) sont disposés symétriquement par rapport à un plan médian (94) de la roue d'entraînement (18) s'étendant transversalement à la broche (16).

11. Entraînement à broche (10) selon l'une quelconque des revendications précédentes, **caractérisé en ce que** les contours extérieurs (15) du tube porteur (14) et du tube de guidage (64) et le contour intérieur (49) du boîtier de transmission (46, 47, 48) réalisé notamment en deux parties, avec les moyens de fixation (89), sont réalisés de telle sorte que la broche (16) puisse être montée avec le tube de guidage (64) dans deux positions de montage tournées de 180° l'une par rapport à l'autre (broche (16) vers la gauche ou vers la droite en saillie hors du boîtier de transmission (46)), sans modifier la construction des composants utilisés.

12. Entraînement à broche (10) selon l'une quelconque des revendications précédentes, **caractérisé en ce que** le tube porteur (14) présente un panneau de support axial (22) en forme de pot, qui est réalisé d'une seule pièce avec le tube porteur (14), ou qui est fixé en tant que composant réalisé séparément (98) dans le tube porteur (14).

13. Procédé de fabrication d'un entraînement à broche (10) selon l'une quelconque des revendications précédentes, **caractérisé en ce que** d'abord la broche (16) est montée avec la roue d'entraînement (18) dans le tube porteur (14), ensuite le tube de guidage (64) est enfiché axialement dans ou sur le tube porteur (14) et ensuite le boîtier de transmission (46, 47, 48) est disposé radialement autour du tube porteur (14) et du tube de guidage (64), de sorte que le tube de guidage (64) soit connecté de manière centrée au tube porteur (14).

14. Procédé selon la revendication 13, **caractérisé en ce que** pour différentes positions de montage de l'entraînement à broche (10), on utilise toujours un boîtier de transmission standard unitaire (46) dans lequel le tube porteur (14) avec le tube de guidage (64) et avec la broche (16) peut être incorporé de manière sélective de telle sorte que la broche (16) fasse saillie axialement d'un côté ou de l'autre hors du boîtier de transmission (46).
